# EUROPEAN PATENT APPLICATION

(11) **EP 4 533 958 A1**
(43) Date of publication of application: **09.04.2025**
(21) Application number: 23811438.3
(22) Date of filing: 29.03.2023
(51) Int. Cl.: A23L 2/00, A23L 2/52, A23L 2/54, C12G 3/04

(54) **PACKAGED BEVERAGE**

(30) Priority: 24.05.2022 JP 2022084422
(71) Applicant: Asahi Group Holdings, Ltd., Tokyo 130-8602 (JP); Asahi Breweries, Ltd., Tokyo 130-8602 (JP)
(72) Inventor: FUJIMURA Kazuki, Moriya-shi, Ibaraki 302-0106 (JP); INOUE Akihiro, Moriya-shi, Ibaraki 302-0106 (JP); HAYASHI Nobuaki, Moriya-shi, Ibaraki 302-0106 (JP); ENDO Minori, Moriya-shi, Ibaraki 302-0106 (JP); MORI Gyohei, Moriya-shi, Ibaraki 302-0106 (JP)
(74) Representative: Hoffmann Eitle
(86) International application number: PCT/JP2023/012789
(87) International publication number: WO 2023/228559

(57) **Abstract**

The purpose of the present invention is to produce an unprecedented packaged beverage with which it is possible to provide a consumer with a new experience value. The present invention relates to a packaged beverage containing a carbonated beverage and dried fruit, wherein the carbonic acid content of the carbonated beverage is a gas volume such that the dried fruit is immersed in the carbonated beverage when the package is closed and the immersed dried fruit floats up toward the carbonated beverage surface when the package is opened. The present invention can provide a novel packaged beverage with which it is possible to create visual enjoyment upon opening.

## Description

### Technical Field

The present invention relates to a novel packaged beverage which can be visually enjoyed upon opening.

### Background Art

In recent years, there has been a demand for providing not only physical values such as taste but also a new experience value in the field of beverages as well.

### Summary of Invention

An object of the present invention is to produce an unprecedented packaged beverage which can provide consumers with a new experience value.

In the development of a novel packaged beverage containing a fruit, the present inventors unexpectedly found a phenomenon that while the fruit remains submerged in the beverage when a container is in a closed state, the fruit slowly floats toward the liquid surface of the beverage when the container is opened under certain conditions. Then, focusing on this phenomenon, the present inventors earnestly conducted studies and completed the present invention.

Specifically, the present invention may be as follows.
[1] A packaged beverage comprising a carbonated beverage and a dried fruit, wherein a carbonic acid content of the carbonated beverage is such a gas volume that the dried fruit remains submerged in the carbonated beverage when a container is in a closed state and the submerged dried fruit floats toward a liquid surface of the carbonated beverage when the container is opened.
[2] The packaged beverage according to the [1], wherein the dried fruit is in the form of a slice and its thickness is 1.0 to 3.0 mm.
[3] The packaged beverage according to the [1], wherein the dried fruit is a dried fruit made from a citrus, apple, blueberry, Japanese plum, or peach.
[4] The packaged beverage according to the [1], wherein the dried fruit is a dried fruit made from a citrus, or lemon, lime, or orange.
[5] The packaged beverage according to the [1], wherein the dried fruit is a sugar-coated dried fruit.
[6] The packaged beverage according to the [1], wherein the carbonic acid content is 1.0 GV or more at 20°C.
[7] The packaged beverage according to the [1], wherein the container is a full open end can or a transparent container.
[8] The packaged beverage according to any one of the [1] to [7], wherein the dried fruit is produced by a hot-air drying method.
[9] A method of producing a packaged beverage comprising a carbonated beverage and a dried fruit, comprising a step of adjusting a carbonic acid content of the carbonated beverage to such a gas volume that the dried fruit remains submerged in the carbonated beverage when a container is in a closed state and the submerged dried fruit floats toward a liquid surface of the carbonated beverage when the container is opened.
[10] The method of producing a packaged beverage according to the [9], further comprising a step of drying a fruit immersed in a sugar solution to produce a sugar-coated dried fruit.
[11] A packaged beverage comprising a carbonated beverage and a dried fruit, wherein the dried fruit remains submerged in the carbonated beverage when a container is in a closed state and the submerged dried fruit floats toward a liquid surface of the carbonated beverage when the container is opened.

The present invention provides a novel packaged beverage which can be visually enjoyed upon opening.

### Description of Embodiments

A packaged beverage of the present invention comprises a carbonated beverage and a dried fruit, wherein the dried fruit remains submerged in the carbonated beverage when a container is in a closed state and the submerged dried fruit floats toward a liquid surface of the carbonated beverage when the container is opened.

The state in which the dried fruit remains submerged in the carbonated beverage only has to be a state in which the dried fruit does not float up onto the liquid surface of the carbonated beverage but remains submerged in the carbonated beverage, and may be a state in which the dried fruit is lying down on the bottom of the container or may be a state in which the dried fruit is drifting in the carbonated beverage. The time taken from when the container was opened to when the dried fruit has floated up to the liquid surface of the carbonated beverage is not particularly limited, but may be, for example, 0 (immediately after) to 120 seconds, or may be 0.1 to 60 seconds, or may be 0.5 to 30 seconds, or may be 1 to 10 seconds. After the container is opened, the motion of the dried fruit lightly floating up can be visually enjoyed.

The dried fruit after floating up may remain floating on the liquid surface of the carbonated beverage or may be submerged in the carbonated beverage again. In addition, since the tissue of the dried fruit included in the packaged beverage of the present invention is impregnated with the carbonated beverage, the texture of the dried fruit may have a preference different from the dried fruit in dry state in which the water content is low.

### <Dried Fruit>

The type of a fruit used as a raw material of the dried fruit of the present invention is not particularly limited, and for example, a fruit or the like which is generally used for beverages, for example, citruses such as lemon, lime, and orange, apple, blueberry, Japanese plum (including pickled plum (umeboshi)), peach, strawberry, pineapple, grape, mango, fig, apricot, pear, banana, kiwi, and the like can be selected and used as appropriate. As the dried fruit, one type may be used, or two or more types may be used.

In addition, in the case where the dried fruit is a citrus, the dried fruit may contain the albedo and the epicarp, or the albedo and the epicarp may be removed. In addition, in the case where the dried fruit is a fruit other than a citrus as well, the epicarp may be contained or may be removed.

The form of the dried fruit is not particularly limited, and may be, for example, the form as it is, may be sliced, or may be cut into wedges.

In addition, the "dried fruit" in the present invention refers to fruit materials in general which have been dried, and for example, even the dried fruit in the state of being impregnated with the carbonated beverage in the present invention is also called "dried fruit" for convenience.

In the case the dried fruit is sliced, the thickness of the dried fruit before drying may be 1.0 to 8.0 mm and may be 2.0 to 6.0 mm. Here, in the present invention, the "thickness of the dried fruit" is assumed to be a thickness at the time when the dried fruit has been added to the carbonated beverage for convenience, and the thickness of the dried fruit may be 0.5 to 5.0 mm and may be 1.0 to 3.0 mm. In addition, the thickness of the dried fruit in the packaged beverage of the present invention may be 1.0 to 8.0 mm and may be 2.0 to 6.0 mm as a result of impregnation of the dried fruit with the carbonated beverage.

By adjusting the thickness of the dried fruit in the present invention within the above numerical ranges, the dried fruit becomes unlikely to be broken and the floating-up motion can be more easily controlled.

In addition, the "dried fruit" in the present invention may be sugar-coated. Depending on the type of dried fruit, sugar-coating allows the shape and hardness at the time of adding the dried fruit to the beverage, or shape and hardness similar to those to be maintained more even after the dried fruit is stored in the state of being submerged in the beverage for a long period of time. This can complement visual enjoyment at the time of opening the container. In particular, since there is a case where a dried fruit in slice shape turns into a state like fu (a bread-like food made of wheat gluten) when stored in the state of being submerged in a beverage for a long period of time, the dried fruit may be sugar-coated from the viewpoint of maintaining the aesthetics of the dried fruit. In addition, the strength of the dried fruit may be increased by sugar-coating. By improving the strength of the dried fruit, in the production of the packaged beverage, for example, in the case where after the dried fruit is put into the container, gassing (a step of replacing the air in the container with nitrogen for the purpose of suppressing oxidation) is conducted, followed by a step of adding the beverage, the dried fruit may be prevented from being caused to jump by a nitrogen gas blown to the dried fruit during the gassing and hitting the inner wall of the container to be broken. A sugar used for sugar-coating is not particularly limited as long as it is a sugar generally used in the art, but may be, for example, sucrose, glucose, fructose, maltose, trehalose, lactose, or the like.

The method of producing a dried fruit is not particularly limited, and the dried fruit of the present invention can be produced, for example, by using a general drying method such as a hot-air drying method (air drying), a vacuum-freeze drying method (freeze drying), or a vacuum drying method (vacuum drying). In addition, there is a tendency that a dried fruit produced by the vacuum-freeze drying method or the vacuum drying method becomes more porous than a dried fruit produced by the hot-air drying method, and becomes more difficult to immerse in a carbonated beverage. For this reason, a dried fruit produced by the hot-air drying method may be used. The water content of the dried fruit of the present invention immediately after the drying process may be, for example, 20% by mass or less and may be 10% by mass or less.

The method of producing a sugar-coated dried fruit is not particularly limited, but may include, for example, a step of drying a fruit (including a raw fruit) immersed in a sugar solution such as an aqueous solution containing the above sugar by a drying method as described above.

### <Carbonated Beverage>

The carbonated beverage in the present invention is not particularly limited as long as the carbonated beverage is a beverage containing carbonic acid. The carbonic acid content of the carbonated beverage is not particularly limited as long as the carbonic acid content is such a gas volume that the dried fruit remains submerged in the carbonated beverage when the container containing the carbonated beverage and the dried fruit is in a closed state, and the submerged dried fruit floats toward the liquid surface of the carbonated beverage when the container is opened. The carbonic acid content may be adjusted depending on the type, thickness, size, mass, and the like of the dried fruit, for example. In addition, the carbonated beverage in the present invention may be produced by pressure-injecting a carbonic acid gas into a beverage containing no carbonic acid which serves as a base as necessary by a general method. The carbonic acid content may be 0.5 GV or more, may be 1.0 GV or more, may be 1.5 GV or more, and may be 2.0 GV or more, at 20°C. In addition, the carbonic acid content may be 5.0 GV or less and may be 4.0 GV or less. The carbonic acid content in the carbonated beverage in the present invention may be a value measured by using a GV tester generally used in the art, for example, GVA-500B (manufactured by Kyoto Electronics Manufacturing Co., Ltd.).

Note that the gas volume of a carbonated beverage is limited by the pressure resistance of the container and the production conditions. For example, in the case of conducting heat sterilization in the production steps, it is necessary to make the pressure inside the container during heating equal to or less than the pressure resistance of the container. For this reason, the gas volume is limited as compared with the case where heat sterilization is not conducted. In addition, since the carbonic acid gas has a bacteriostatic action, in the case where the pressure of the carbonic acid gas in the container is 98 kPa or more at 20°C and the beverage does not contain a tissue component of a plant or an animal such as a fruit juice, a fruit, or milk, heat sterilization is unnecessary, and the gas volume can be made higher.

The carbonated beverage may be a non-alcoholic beverage or may be an alcoholic beverage. In addition, the carbonated beverage may be a beverage produced with a fermenting step or may be a beverage produced without a fermenting step. In the case where the carbonated beverage in the present invention is an alcoholic beverage, the alcohol by volume (volume concentration of ethanol) is not particularly limited and is determined as appropriate depending on the product quality to be targeted. For example, the alcohol content of the carbonated beverage may be adjusted such that the alcohol by volume becomes 0.7% by volume or more, or 1% by volume or more, or 2% by volume or more, or 3% by volume or more. In addition, in the case where the carbonated beverage in the present invention is an alcoholic beverage, the extracted component may be 0 to 15 degrees, or may be 1 to 10 degrees, or may be 3 to 7 degrees.

In addition, the carbonated beverage in the present invention may contain a flavoring of a fruit that is the same as or different from the dried fruit contained in the packaged beverage or a flavoring that is other than fruit-based flavors.

The pH of the carbonated beverage in the present invention may be adjusted depending on a purpose such as control of microorganisms or suppression of degradation of a flavor component. In general, the lower the pH of a beverage is, the more difficult microorganisms glow. However, a too low pH makes the acidity too strong. In addition, some flavor components degrade more easily when the pH is low. From the viewpoint of an intensity of acidity suitable for a beverage and suppression of degradation of flavor components, the pH of the carbonated beverage is preferably 2.0 or more, more preferably 2.5 or more, and further preferably 3.0 or more. In addition, in consideration of suppression of growth of microorganisms, intensity of sterilization conditions, and the like, in the case where the carbonated beverage in the present invention does not contain an alcohol, the pH of the carbonated beverage is preferably 5.0 or less, more preferably 4.0 or less, and further preferably less than 4.0. In the case where the carbonated beverage contains an alcohol, the pH of the carbonated beverage is preferably 6.5 or less and more preferably 5.0 or less.

For example, in the case where the beverage contains a large amount of a flavor component that degrades more easily when the pH is lower, it is preferable to make the pH of the carbonated beverage relatively high. For example, citral degrades more easily when the pH is lower, and thus in the case where the packaged beverage according to the present invention is a lemon-flavored beverage containing citral, the pH of the carbonated beverage is preferably 3.0 or more and more preferably 3.5 or more, and the pH is preferably 3.0 to 4.0 and particularly preferably 3.5 to 3.7 because the growth of microorganisms can be sufficiently suppressed and a favorable acidity as a lemon flavor can be achieved more easily.

The carbonated beverage in the present invention may contain optional ingredients such as alcohols, carbonated water, fruits, vegetables, herbs, sugars, flavors, other food materials, and food additives, for example. Such optional ingredients will be described below.

### <<Optional Ingredient That May be Contained>>

The alcohols of optional ingredients include raw material alcohol; liquors such as vodka, whiskey, brandy, shochu, rum, spirits, and gin; brews such as wine, cider, beer, and sake; and mixed alcoholic beverages such as liqueur and vermouth, and the like. In the carbonated beverage, one alcohol may be contained or two or more alcohols may be contained. Note that in the case where the packaged beverage according to the present invention is a liquid carbonated beverage in which an alcohol and a food material are mixed, the beverage is categorized as a liqueur (the extracted component is two degrees or more) or spirits (the extracted component is less than two degrees) in accordance with the Liquor Tax Act (effective on April 1, 2018) of Japan

The fruits, vegetables, and herbs of optional ingredients are not particularly limited, and a fruit or the like which is generally used for a beverage can be selected and used as appropriate. In the carbonated beverage, one fruit, vegetable, or herb may be contained or two or more fruits, vegetables, herbs may be contained.

In addition, the carbonated beverage may contain a shredded fruit or the like as it is, or a squeeze such as a fruit juice or a vegetable juice may be added as a raw material. Note that fruit juices are defined in the Japanese Agricultural Standards for fruit beverages in Japan, and internationally in the CODEX STAN 247-2005 on fruit juices and nectars. As the fruit, a concentrated fruit juice, a from-concentrate juice, or the like may be used, or a fruit juice from which part of an insoluble solid component is removed to be purified may be used. In addition, as the fruit or vegetable, a fruit extract or a vegetable extract may be added as a raw material. In particular, it is preferable that the packaged beverage contain a fruit juice or an extract of a fruit or the like of the same type as the dried fruit contained in the packaged beverage. A fruit extract or vegetable extract is obtained by extracting components contained in a fruit or vegetable by using water or an alcohol from a shredded fruit or vegetable. These extracts are produced, for example, by a method using hot water extraction, a method including eluting a fruit component by using a liquefied gas and then vaporizing the liquefied gas to separate and collect the fruit component, and the like.

As the sugars (collective term of monosaccharides · disaccharides) of optional ingredients, sucrose, glucose, fructose, isomerized sugar, or the like may be contained. By causing the carbonated beverage to contain these sugars, sweetness, body, and the like can be added. One sugar may be contained or two or more sugars may be contained.

The flavors and other food materials of optional ingredients include, for example, fibers, yeast extracts, proteins, or hydrolysates of these. Among these, water-soluble fibers are widely used in order to impart body and other functionalities to beverages. The water-soluble fibers mean carbohydrates that are dissolved in water and are not digested or hardly digested by digestive enzymes of human. The water-soluble fibers include, for example, soy bean fiber, polydextrose, indigestible dextrin, galactomannan, inulin, partially hydrolyzed guar gum, pectin, gum arabic, and the like. One of these water-soluble fibers may be used alone or two or more of these may be used in combination.

As food additives of optional ingredients, products that can be used based on national legislations can be used and are not particularly limited within the ranges. For example, a preservative, an antioxidant, and the like for preserving the quality of foods, a colorant, a flavoring, a sweetener, an acidifier, an emulsifier, and the like for improving preferences of foods, a pH adjuster, an antifoam, a foaming agent, and the like necessary for producing or processing foods, and a nutrition fortifier used for supplementing and fortifying nutrient components can be contained as necessary.

Some of food additives will be briefly described.

Colorants are food additives for improving the colors of foods, and are generally divided into chemically synthesized colorants and natural colorants, and classified as designated additives, existing additives, and general food and drink additives in the Food Sanitation Act of Japan. As a colorant, caramel color which colors foods a brown color is widely used. Note that as side benefits of caramel color, roasted sensation, richness, and the like can be imparted to beverages.

Flavorings are used for adding flavors to foods or enhancing flavors of foods. Flavorings for foods include natural flavorings which are extracted from natural products and synthesized flavorings which are chemically synthesized. Natural flavorings are defined as "additives which are products obtainable from animals or plants or mixtures thereof and which are used for adding flavors to foods" in the Food Sanitation Act of Japan, and names of usable animals and plants are described in the "List of original source plants and animals of natural flavorings" as examples. In addition, most of synthesized flavorings are compounds chemically synthesized as the same components as those present in foods, and are designated in the "Food Sanitation Act Enforcement Regulations Annex 1".

Flavorings for foods are not often used alone, and blended products obtained by combining a number of flavoring compounds are normally used. The forms of products of flavorings include water-soluble flavorings, oil-soluble flavorings, emulsified flavorings, powdered flavorings, and the like. Water-soluble flavorings are obtained by extracting and dissolving flavoring bases with an aqueous alcohol, propylene glycol, or the like which is a water-soluble solvent. Oil-soluble flavorings are obtained by dissolving flavoring bases with a plant-based oil or the like. Emulsified flavorings are obtained by emulsifying flavoring bases in water into the state of fine particles by using an emulsifier or a stabilizer. Emulsified flavorings add haze to beverages and are thus also called cloudy. Powdered flavorings are obtained by emulsifying flavoring bases with an excipient such as dextrin, natural gum substance, sugar, or starch, and spray-drying the flavoring bases into a powder or attaching the flavoring bases to lactose or the like. For beverages, the water-soluble flavorings and the emulsified flavorings are normally used.

Sweeteners are used for the purposes of imparting sweetness to foods, but the above-mentioned sugars and some low-sweetness substances (starch syrup, erythritol, maltitol, lactitol, and the like) are classified as foods but not as food additives. Low-sweetness substances classified as food additives include L-arabinose, D-xylose, trehalose, D-sorbitol, xylitol, mannitol, and the like, and high-sweetness substances include aspartame, neotame, acesulfame potassium, saccharin, sucralose, disodium glycyrrhizinate, stevia extract, glycyrrhiza extract, thaumatin, and the like. Note that in the Food Sanitation Act of Japan, sweeteners are classified as designated additives, existing additives, and general food and drink additives. For beverages, aspartame, acesulfame potassium, sucralose, and the like which have sweetness characteristics similar to sucrose, glucose, fructose, and the like which are sugars conventionally used for beverages are widely used. In the carbonated beverage in the present invention as well, one or more of these sweeteners widely used in beverages are preferably used.

Acidifiers are used for imparting acidity to foods or for enhancing acidity. Acidifiers include organic acids such as citric acid and lactic acid and salts thereof, and inorganic acids such as phosphoric acid and carbon dioxide. By using an organic acid and a salt thereof in combination, a specific pH can be more readily maintained through a buffering effect.

Note that substances collectively listed as acidifiers in Japan include adipic acid, citric acid, trisodium citrate, glucono delta lactone, gluconic acid, potassium gluconate, sodium gluconate, succinic acid, sodium succinate, disodium succinate, sodium acetate, DL-tartaric acid, L-tartaric acid, sodium DL-tartrate, sodium L-tartrate, carbon dioxide, lactic acid, sodium lactate, glacial acetic acid, fumaric acid, sodium fumarate, DL-malic acid, sodium DL-malate, and phosphoric acid as designated additives, and itaconic acid, phytic acid, and α-ketoglutaric acid as existing additives.

Acidifiers used in beverages are selected depending on the flavor of the beverage. For example, in the case of citrus-flavored beverages, citric acid and citrates which are contained in large amounts in citruses are often selected, in the case of grape-flavored beverages, tartaric acid and tartrates which are contained in large amounts in grapes are often selected, and in the case of apple-flavored beverages, malic acid and malates which are contained in large amounts in apples are often selected.

Emulsifiers are used for the purposes of emulsification, dispersion, diffusion, washing, foaming, defoaming, and mold release, and the like in foods, and are often used in beverages for the purposes of dispersing (emulsifying) oils in liquids. For example, emulsifiers are used for dispersing hydrophobic components uniformly in water, and suppressing the separation of oil and fat components derived from raw materials.

The above-mentioned food materials and food additives are merely examples, and substances that may be contained in the packaged beverage according to the present invention are not limited to these. The types and amounts of food materials and food additives to be used may be selected and adjusted as appropriate depending on the purposes.

### <Container>

A container to be used in the packaged beverage of the present invention is not particularly limited, and two-piece beverage cans, three-piece beverage cans, bottle-shaped cans, flexible containers, glass bottles, and the like can be used. Flexible containers include containers formed by molding a flexible resin such as PE (polyethylene), PP (polypropylene), EVOH (ethylene vinyl alcohol copolymer), and PET (polyethylene terephthalate) into a bottle shape and the like. The flexible container may be formed from a single resin layer or may be formed from multiple resin layers.

In order to visually enjoy how the dried fruit floats up from the bottom, for example, in the carbonated beverage, the container may be a full open end can or a transparent container. In addition, the container may be a full open end can because the size of the dried fruit that can be put is not limited by an opening portion when the dried fruit is put into the container.

Hereinafter, the present invention will be described in further detail by using Examples; however, the present invention is not limited to these Examples.

### Examples

### 1. Preparation of Base Solution

Raw materials were blended as shown in Table 1 to prepare a base solution having an alcohol by volume of 6%, an extracted component of 3.5 degrees, and pH of 3.5.

**[Table 1]**

| Raw materials | Blended amount |
|---|---|
| Raw material alcohol (alcohol by volume: 95.3%) | 66.5 ml |
| 55% High-fructose corn syrup | 37.0 g |
| Citric acid (anhydride) | 3.0 g |
| Trisodium citrate | 2.0 g |
| Flavoring | 1.0 g |
| Water added (distilled water) | |
| Total | 1000 ml |

### 2. Experiment (1)

In the present experiment, dried lemons (having a thickness of 1 mm) obtained by drying raw lemon slices having a thickness of 3 mm with hot air were used.

Next, carbonic acid was added to the base solution to prepare beverages having carbonic acid contents (GV), respectively, as shown in Table 2. One slice of the dried lemons was put into beverage cans, and the beverage cans were filled with the beverages. Then, full open end can lids were seamed on the beverage cans to produce packaged beverage samples.

The packaged beverage samples thus produced were left to stand and stored at 25°C for 48 hours, and were then opened. At the time of opening, it was visually checked whether each submerged dried lemon floated up to the surface of the beverage. Results are shown in Table 2. The samples in which the submerged dried lemon floated up to the surface of the beverage after the opening were given ∘ for float-up evaluation, and the samples in which the dried lemon did not float up but remained submerged therein after the opening were given × for float-up evaluation.

**[Table 2]**

| Sample No. | 1 | 2 | 3 | 4 | 5 | 6 | 7 | 8 |
|---|---|---|---|---|---|---|---|---|
| GV (20°C) | 0.0 | 0.1 | 0.5 | 1.0 | 1.5 | 2.0 | 2.3 | 2.6 |
| Float-up evaluation | × | × | × | ○ | ○ | ○ | ○ | ○ |

It was confirmed that it was possible to control the motion of the dried lemon as desired by adjusting the thickness of the dried lemon and the gas volume of the carbonated beverage.

### 3. Experiment (2)

The same experiment as the above Experiment (1) was conducted except that dried lemons (having a thickness of 2 mm) obtained by drying raw lemon slices having a thickness of 6 mm with hot air were used. Results are shown in Table 3.

**[Table 3]**

| Sample No. | 9 | 10 | 11 | 12 | 13 | 14 | 15 | 16 |
|---|---|---|---|---|---|---|---|---|
| GV (20°C) | 0.0 | 0.1 | 0.5 | 1.0 | 1.5 | 2.0 | 2.3 | 2.6 |
| Float-up evaluation | × | × | × | × | × | ○ | ○ | ○ |

It was confirmed that it was possible to control the motion of the dried lemon as desired by adjusting the gas volume of the carbonated beverage depending on the thickness of the dried lemon.

### 4. Experiment (3)

Each dried fruit was obtained by slicing the corresponding raw fruit shown in Table 4 into a thickness before drying shown in Table 4, and drying the slice with hot air. However, the dried fruit of blueberry was obtained by drying the blueberry as it is with hot air without slicing, and the dried fruit of pickled plum (umeboshi) was obtained by drying the pickled plum (umeboshi) as it is with hot air after the seed of the pickled plum (umeboshi) was removed, each under the same conditions (samples 22 and 23). The diameter of the dried pickled plum (umeboshi) was about 35 mm.

Next, the carbonic acid content of the base solution was adjusted to carbonic acid contents (GV) shown in Table 4, and beverage cans were filled with the respective solutions. Thereafter, the obtained dried fruits were put into the respective beverage cans, and after it was confirmed that the dried fruits were submerged therein, full open end can lids were seamed on the beverage cans to produce packaged beverage samples.

The packaged beverage samples thus produced were left to stand and stored at 25°C for 48 hours, and were then opened. At the time of opening, it was visually checked whether each submerged dried fruit floated up to the surface of the beverage. Evaluation was made in the same manner as in the above Experiment (1).

**[Table 4]**

| Sample No. | 17 | 18 | 19 | 20 | 21 | 22 | 23 | 24 |
|---|---|---|---|---|---|---|---|---|
| Fruit | Lime | Orange | Orange | Apple (red) | Apple (green) | Blueberry | pickled plum (umeboshi) (without seed) | Peach |
| Form | Slice | Slice | Slice | Slice | Slice | As it is | As it is | Slice |
| Thickness before drying [mm] | 6 | 5 | 6 | 3 | 3 | - | - | 6 |
| Thickness after drying [mm] | 2.5 | 2.0 | 2.0 | 1.0 | 1.0 | | | 1.0 |
| GV (20°C) | 2.3 | 2.3 | 2.3 | 2.3 | 2.3 | 2.3 | 2.3 | 2.3 |
| Float-up evaluation | ○ | ○ | ○ | ○ | ○ | ○ | ○ | ○ |

It was confirmed that it was possible to control the motion of each dried fruit as desired by adjusting the gas volume of the carbonated beverage irrespective of the type of fruit.

### 5. Experiment (4)

The present experiment used a sugar-coated dried lemon (having a thickness of 2 mm) which was obtained by immersing a raw lemon slice having a thickness of 6 mm in a 10% aqueous solution of glucose and then drying the slice with hot air and a dried lemon (having a thickness of 2 mm) which was obtained by drying a raw lemon slice having a thickness of 6 mm without immersing the slice in a 10% aqueous solution of glucose.

Next, carbonic acid was added to the base solution to prepare a beverage of 2.3 GV, and a beverage can in which one slice of the sugar-coated dried lemon was put and a beverage can in which one slice of the dried lemon was put were filled with the beverage, and then full open end can lids were seamed on the beverage cans to produce packaged beverage samples.

The packaged beverage samples thus produced were sterilized at 65°C for 20 minutes and left to stand and stored at 37°C for 1 week, and were then opened. After the opening, the states of the respective dried fruits were observed.

As a result of the experiment, in the packaged beverage sample in which the sugar-coated dried lemon was put, the shape and hardness of the dried fruit remained maintained as compared with the packaged beverage sample in which the dried lemon was put.

### 6. Experiment (5)

The present experiment used a sugar-coated dried lemon (having a thickness of 2 mm) which was obtained by immersing a raw lemon slice having a thickness of 6 mm in a 10% aqueous solution of glucose and then drying the slice with hot air and a dried lemon (having a thickness of 2 mm) which was obtained by drying a raw lemon slice having a thickness of 6 mm with hot air without immersing the slice in a 10% aqueous solution of glucose.

Next, one slice of the sugar-coated dried lemon and one slice of the dried lemon were put in beverage cans, respectively, and then a nitrogen gas was blown into the cans in order to replace the air in the cans with nitrogen. At this time, the dried fruits collided with the inner walls of the cans. An experiment was conducted 10 times under each condition for each dried fruit to check whether or not the dried fruit was broken.

As a result of the experiments, while the breakage of the dried fruit was not observed in the sample in which the sugar-coated dried lemon was put, the breakage of the dried fruit was observed 8 out of 10 times in the sample in which the dried lemon was put.

## Claims

1. A packaged beverage comprising a carbonated beverage and a dried fruit, wherein a carbonic acid content of the carbonated beverage is such a gas volume that the dried fruit remains submerged in the carbonated beverage when a container is in a closed state and the submerged dried fruit floats toward a liquid surface of the carbonated beverage when the container is opened.

2. The packaged beverage according to claim 1, wherein the dried fruit is in the form of a slice and its thickness is 1.0 to 3.0 mm.

3. The packaged beverage according to claim 1, wherein the dried fruit is a dried fruit made from a citrus, apple, blueberry, Japanese plum, or peach.

4. The packaged beverage according to claim 1, wherein the dried fruit is a dried fruit made from a citrus, or lemon, lime, or orange.

5. The packaged beverage according to claim 1, wherein the dried fruit is a sugar-coated dried fruit.

6. The packaged beverage according to claim 1, wherein the carbonic acid content is 1.0 GV or more at 20°C.

7. The packaged beverage according to claim 1, wherein the container is a full open end can or a transparent container.

8. The packaged beverage according to any one of claims 1 to 7, wherein the dried fruit is produced by a hot-air drying method.

9. A method of producing a packaged beverage comprising a carbonated beverage and a dried fruit, comprising a step of adjusting a carbonic acid content of the carbonated beverage to such a gas volume that the dried fruit remains submerged in the carbonated beverage when a container is in a closed state and the submerged dried fruit floats toward a liquid surface of the carbonated beverage when the container is opened.

10. The method of producing a packaged beverage according to claim 9, further comprising a step of drying a fruit immersed in a sugar solution to produce a sugar-coated dried fruit.

11. A packaged beverage comprising a carbonated beverage and a dried fruit, wherein the dried fruit remains submerged in the carbonated beverage when a container is in a closed state and the submerged dried fruit floats toward a liquid surface of the carbonated beverage when the container is opened.
